# FASCICULE DE BREVET EUROPEEN

(11) **EP 3 236 747 B1**
(45) Date de publication et mention de la délivrance du brevet: **12.09.2018**
(21) Numéro de dépôt: 15823613.3
(22) Date de dépôt: 23.12.2015
(51) Int. Cl.: A01M 1/02, A01M 1/10

(54) **PIEGE A INSECTES RAMPANTS**
FALLE FÜR KRIECHENDE INSEKTEN
CRAWLING-INSECT TRAP

(30) Priorité: 23.12.2014 FR 1402998
(43) Date de publication de la demande: 01.11.2017
(73) Titulaire: AB7 Innovation S.A.S.U., 31450 Deyme (FR); Ovalie Innovation S.A.S, 32000 Auch (FR)
(72) Inventeur: CHELLE, René, 31190 Grepiac (FR); HARRACA, Vincent, 31450 Montesquieu Lauragais (FR); VILBERT, Arnaud, 31450 Baziege (FR); BALLAS, Stéphane, 32450 Castelnau Barbarens (FR); HIREL, Sébastien, 32110 Nogaro (FR); VERONESE, Thierry, 31370 Lautignac (FR); BUSUTTIL, Anne Marie, 32000 Auch (FR)
(86) Numéro de dépôt international: PCT/FR2015/000240
(87) Numéro de publication internationale: WO 2016/102787

(56) Documents cités:
- EP-A1- 2 489 261
- EP-A1- 2 559 338
- CA-A1- 2 730 828
- US-A- 1 364 949
- US-A- 3 851 417

## Description

La présente invention se situe dans le domaine des dispositifs destinés à la lutte contre des insectes invasifs. Précisément, la présente invention concerne un piège destiné à capturer les insectes rampants se trouvant en tout lieu à traiter.

Plus particulièrement, la présente invention a pour objet un piège à insectes rampants comprenant un corps creux perforé de plusieurs orifices sur sa surface extérieure. Ledit corps creux de forme géométrique variable est constitué par deux éléments s'emboîtant l'un à l'autre pour permettre son vidage. Chaque orifice se prolonge en un tunnel orienté vers l'intérieur dudit corps creux, dont l'extrémité intérieure est ouverte dans le vide. Le tunnel est conçu de sorte que l'extrémité se trouvant à l'intérieur du corps creux n'en touche pas le fond. Les insectes rampants pénètrent par les orifices sans aucune possibilité de ressortir et sont ainsi emprisonnés vivants dans le corps creux. En conditions d'utilisation, le piège peut être disposé en toute position tout en gardant son efficacité.

Pour lutter contre les insectes indésirables, il existe plusieurs techniques bien connues et spécifiques en fonction du type d'insectes en présence. Ce constat est d'autant plus vrai selon qu'il s'agit d'insectes volants ou d'insectes rampants. En effet, il a été observé que l'apparence ornementale générale du piège joue un rôle dans la propension des insectes à être attirés par un piège donné. Concernant les pièges, leur spécificité dépend de leur apparence, de leur accessibilité vis-à-vis des insectes à capturer (Vale 1982, Brightwell et *al.* 1991). D'autres paramètres tels que l'opacité, la couleur sont également des critères essentiels à prendre en compte pour le développement d'un piège comme il a été étudié en laboratoire et sur le terrain sur la mouche et le scarabée (Finch & Skinner, 1974).

Pour améliorer l'efficacité des pièges, l'utilisation de molécules attractives seules ou associées à des insecticides est largement décrite dans l'art antérieur. Toutefois, certains insecticides sont de moins en moins efficaces à cause des phénomènes de résistance développés par les insectes ciblés. De plus, certains insecticides sont néfastes tant pour la santé humaine que pour l'environnement ce qui restreint leur utilisation dans la mesure où ils ne répondent pas aux normes réglementaires (Steelman 2008, Chernaki-Leffer et *al.* 2011).

Le petit ténébrion, *Alphitobius diaperinus* (Panzer 1797), mesurant entre 5 et 7 mm de longueur est un insecte nuisible très difficile à éradiquer chez les éleveurs de volailles car il est bien adapté aux environnements chauds et humides (Dunford & Kaufman 2012) de sorte que les bâtiments d'élevage de volailles sont particulièrement envahis, l'invasion se propageant sous forme de patch (Salin et al. 2000, Amir & Nadir 2009). Cette forte concentration d'*A. diaperinus* dans lesdits bâtiments pose de nombreux problèmes sanitaires notamment des dommages causés au système digestif des oiseaux (Geden & Hogsette 2001, Dinev 2013), de transmission de virus (Dunford & Kaufman 2012), de bactéries (Geden & Hogsette 2001, Dinev 2013) ou de protozoaires (Goodwin & Waltman 1996) et des problèmes économiques liés à la dégradation des matériaux isolants desdits bâtiments tant par les larves que par les adultes (Geden & Hogsette 2001, Dunford & Kaufman 2012).

Le brevet DE19531981 divulgue un piège à insectes comprenant un corps creux formé par un tube en papier pouvant se rétracter et s'étirer à la manière d'un accordéon. Le tube est perforé sur toute sa surface extérieure. En conditions d'utilisation, le tube s'étire verticalement et les ouvertures de forme elliptique permettent aux insectes de s'introduire dans le piège. Un entonnoir pouvant être en plastique est positionné à chaque extrémité du tube. Chaque entonnoir est également perforé. Toutefois, une proportion d'insectes capturés dans le tube parvient à ressortir par les orifices en escaladant la paroi intérieure du tube.

Le brevet FR2750572 divulgue un piège à insectes rampants comportant une boite pyramidale à base rectangulaire en plastique. L'accès à l'intérieur du piège se fait exclusivement par le bas grâce à au moins un orifice d'entrée prévu sur la base. La paroi intérieure de la boite est enduite d'insecticide et d'appâts. Le piège doit être suspendu à une certaine hauteur pour autoriser les insectes à y pénétrer. Mais, les insectes capturés qui ne sont pas tués par l'insecticide peuvent facilement ressortir du piège par le même orifice d'entrée.

Pour empêcher les insectes de ressortir du piège une fois qu'ils sont emprisonnés, le document JP2012110294 divulgue un dispositif comprenant un réservoir perforé d'orifices et une brosse ayant plusieurs picots souples plaquée juste sous les orifices à l'intérieur du réservoir de sorte que les insectes peuvent pénétrer en écartant les picots mais ne peuvent pas en ressortir. On peut citer les brevets US1618513, US2741066 et US2011078941 qui décrivent des pièges conçus dans le même esprit. Aucun de ces documents ne divulgue des orifices qui se prolongent par des tunnels orientés vers l'intérieur du réservoir.

Le brevet GB2386115 divulgue un piège à insectes volants constitué par une tige creuse cylindrique dont l'extrémité conique faisant office de diaphragme s'insère dans un récipient cylindrique à goulot. Le goulot, fermé à l'aide d'une membrane faite de matériau souple, se referme automatiquement dès que la tige est retirée ce qui permet d'éviter que les insectes emprisonnés s'échappent du récipient. Sur la surface extérieure de la tige creuse se trouvent trois ouvertures de type entonnoirs qui se prolongent vers l'intérieur. Mais, en conditions d'utilisation, le piège doit être disposé en position verticale. De plus, les entonnoirs facilitent l'entrée des insectes volants tout en leur offrant malheureusement la possibilité de ressortir par la même ouverture en escaladant la paroi intérieure de la tige.

Le brevet européen EP1959729 divulgué un dispositif de piégeage d'insectes volants frugivores. Ce dispositif comprend un couvercle transparent combiné avec un seau réservoir opaque à fond tronconique dont les couleurs attirent les insectes. Trois tunnels sont radialement disposés sur le flanc du réservoir de manière à permettre l'entrée des insectes et à faciliter la diffusion des attractifs placés au fond du seau. Un diffuseur imprégné de substances attractives aqueuses associées à un insecticide est obligatoirement introduit dans le dispositif. En conditions d'utilisation, le dispositif est suspendu aux branches d'un arbre à une hauteur comprise entre 1,4 m et 1,8 m du sol. Mais, l'efficacité du piège est limitée par l'épuisement des attractifs et de l'insecticide. De plus, une partie des insectes volants capturés parviennent à ressortir du piège. Enfin, en conditions d'utilisation, le piège doit être placé en position verticale.

La demande internationale WO2010069503 tente d'améliorer certaines caractéristiques techniques décrites par le document EP1959729 en insistant sur le rôle joué par les trois tunnels situés sur le flanc du seau réservoir de manière à améliorer l'efficacité du piège. Grâce au couvercle transparent, la lumière éclaire tout l'intérieur du seau réservoir à l'exception de l'intérieur des trois tunnels qui reste sombre. Par le principe du phototropisme, les mouches sont attirées par la lumière à l'intérieur du seau et traversent le tunnel. Etant donné que la luminosité à l'intérieur du piège est relativement uniforme, les mouches capturées sont désorientées en cherchant une issue et se fatiguent puis sont tuées pas l'insecticide. Les trois tunnels sont disposés radialement de manière à faciliter la circulation de l'air et donc de la diffusion de l'attractif, lesdits tunnels pouvant être parfois retirés par l'utilisateur. Mais, certaines mouches parviennent encore à ressortir par le même orifice car l'intensité de la lumière perçue en face de l'extrémité intérieure du tunnel est plus importante par rapport au reste de l'intérieur du piège, son efficacité est donc tributaire de la luminosité du jour. De plus, en conditions d'utilisation, le piège doit être disposé en position verticale.

Le brevet EP2559338 décrit un piège à insectes volants constitué d'un corps creux et d'un couvercle, le flan du corps creux étant pourvu de quatre tunnels fixes se prolongeant vers l'intérieur du corps creux. Afin d'améliorer le rendement de capture, la partie inférieure du corps creux devant être opaque et le couvercle translucide.

Le brevet CA2730828 décrit un piège à forficules comprenant un réservoir devant contenir du liquide et un couvercle amovible ; à la mi-hauteur de la paroi latérale du réservoir sont situés des tunnels fixes de section circulaire qui se prolongent vers l'intérieur ; chaque tunnel, dont la paroi intérieure est lisse, étant légèrement incliné vers le bas par rapport à un plan horizontal. Afin d'augmenter le rendement de capture, d'une part, des bandes réfléchissantes sont prévues sur une portion de la surface extérieur du réservoir ; d'autre part, le couvercle peut comporter une mèche comportant un attractif est plongée vers l'intérieur du réservoir.

Le brevet US1364949 décrit un piège à mouches dont le corps creux est constitué de deux portions s'emboitant l'une à l'autre ; six tunnels fixes de section circulaires sont distribués radialement à la ligne de jointure des deux portions. La partie apicale du corps creux étant pourvue d'une anse permettant de le suspendre et la partie basale devant être plane ou est pourvue de pieds de sorte que le piège puisse se maintenir en position verticale stable.

Le brevet EP2489261 décrit un piège à insectes frugivores comprenant un corps creux en divisé en deux parties qui s'emboitent entre elles ; la partie supérieure étant transparent dont le plafond est enduite par au moins un insecticide de contact ; la partie inférieure correspondant à un réservoir comporte au moins un tunnel fixe qui se prolonge vers l'intérieur, certains des tunnels sont situés radialement et au moins un tunnel est situé sur la partie basale.

L'orientation d'un animal dans l'espace grâce à son sens du toucher est un comportement très commun appelé thigmotactisme. Il peut être défini comme le fait qu'un animal en déplacement qui entre en contact avec une surface tend à éviter la perte de ce contact à la surface (Treit and Fundytus, 1989). La blatte est ainsi un exemple d'insecte ayant un comportement thigmotactique très fort (Bell, 1981), mais ce comportement est quasi universel (Jeanson et *al.,* 2004). Ce comportement thigmotactique est utilisé dans différents brevets tels que US4784086 et US5097641 afin de dévier le déplacement d'insectes rampants et ainsi éviter leur déplacement vers une source à protéger ou DE3221985 afin de les diriger dans une zone contenant un pesticide. La demande de brevet WO2010098917A1 décrit l'utilisation du thigmotactisme des punaises de lit pour les faire entrer dans un piège.

Tous les pièges divulgués par l'art antérieur ne sont pas adaptables spécifiquement aux insectes rampants, encore moins aux ténébrions dans les bâtiments d'élevage avicole en ce sens que, pour augmenter la probabilité de capture, ces pièges doivent être soit associés à du liquide, soit à des insecticides, soit à des nuances de couleurs ou de luminosité. De plus, ils doivent adopter une position particulière et fixe en conditions d'utilisation faute de quoi les insectes capturés sont susceptibles de s'en échapper ce qui réduit leur efficacité. De même, les tunnels sont fixes car ils sont moulés directement avec le corps creux et leurs dimensions sont également fixes de sorte qu'elles sont uniquement adaptées à la capture d'un seul type d'insecte cible.

La présente invention se propose de surmonter les inconvénients énumérés ci-dessus en fournissant un piège perfectionné apte à capturer plusieurs types d'insectes, particulièrement des insectes rampants, en gardant un corps creux unique mais en retirant uniquement les tunnels pour leur remplacement, ledit piège ayant une forte probabilité de capture sans adjonction ni de liquide pour noyer les insectes capturés, ni d'aucune nuance de couleurs. En conditions d'utilisation, il peut être disposé à même le sol étant donnée qu'il est apte à rouler sur lui-même et il doit pouvoir fonctionner dans n'importe quelle position y compris en position horizontale sans affecter son efficacité. Ledit piège est particulièrement destiné à capturer les ténébrions, tant les larves que les adultes se trouvant dans les bâtiments d'élevage avicoles ainsi que les insectes se trouvant dans les habitations tels que les cafards, les blattes, voire les mouches domestiques.

Les insectes étant des organismes à symétrie bilatérale, les dimensions mentionnées dans le texte sont basées sur les plans de coupe de tels organismes ; les dimensions étant l'ensemble de la longueur, la largeur et la hauteur de l'insecte. Ainsi, au sens de l'invention, on entend par « largeur » l'axe le plus long dans le plan frontal de l'insecte. Par exemple, pour les insectes de forme sensiblement tubulaire, la largeur correspond à son diamètre. La partie du corps de l'insecte à partir de laquelle est mesuré cet axe est celle la plus imposante parmi la tête, le thorax y compris les ailes ou l'abdomen.

On entend par « longueur » de l'insecte l'axe le plus long dans le plan sagittal de l'insecte.

On entend par « hauteur » de l'insecte l'axe le plus long entre le sol et le dessus de l'insecte dans le plan transversal.

On entend par paroi « lisse » une paroi ou une surface suffisamment lisse de sorte que l'insecte qui s'y trouve éprouve de grandes difficultés pour s'y déplacer.

On entend par dimensions de tunnel « adaptables » aux dimensions de l'insecte le fait que l'on contraint l'insecte à progresser dans le tunnel de manière unidirectionnelle vers l'intérieur du piège sans lui laisser la possibilité de faire demi-tour en pivotant sur lui-même, soit sur toute la longueur du tunnel, par exemple pour un tunnel cylindrique, soit sur au moins une partie pour un tunnel tronconique ou en forme d'entonnoir. Il a été observé que, grâce au comportement thigmotactique, certains insectes ont une propension à se déplacer de manière unidirectionnelle lorsqu'ils se trouvent dans un espace restreint, cela étant d'autant plus vrai dès lors qu'une partie de leur corps effleure un obstacle.

Un premier objet de la présente invention est un dispositif formé de deux éléments s'emboitant l'un à l'autre en tant que piège à insectes rampants amélioré pouvant être disposé dans toute position en conditions d'utilisation. En d'autres termes, le piège conforme à l'invention peut être disposé à même le sol tant en position horizontale que verticale. Le dispositif permet de piéger les insectes rampants de sorte qu'une fois à l'intérieur du piège, il leur est totalement impossible d'en ressortir. Le piège conforme à la présente invention ne fait intervenir aucune nuance de couleurs pour attirer les insectes.

Un second objet de la présente invention est de fournir un procédé permettant de capturer plusieurs types d'insectes, particulièrement les insectes rampants notamment les ténébrions dans les élevages avicoles au moyen du piège selon la revendication 1.

Ainsi, la présente invention a pour premier objet un piège à insectes comprenant un corps creux formé par deux éléments s'emboitant l'un à l'autre, la surface extérieure dudit corps creux est perforée de plusieurs orifices permettant à l'insecte à capturer de pénétrer à l'intérieur du piège, chaque orifice se prolongeant en tunnel orienté vers l'intérieur du corps creux caractérisé en ce que des éléments de tunnels amovibles sont implantés à la surface dudit corps creux par l'intermédiaire de sa partie supérieure laquelle s'imbrique dans le trou d'implantation directement pratiqué sur le corps creux, ledit élément de tunnel comporte une partie inférieure correspondant au tunnel dont le diamètre intérieur et la longueur sont adaptables aux dimensions de l'insecte cible de sorte que ledit insecte s'y trouvant est contraint de progresser de manière unidirectionnelle vers l'intérieur du corps creux mais ne l'autorisent pas à faire demi-tour en pivotant sur lui-même sur tout ou au moins une partie de la longueur dudit tunnel, et en ce que la paroi intérieure dudit tunnel étant rugueuse pour permettre à l'insecte d'y progresser tandis que la paroi extérieure est lisse pour empêcher les insectes capturés dans le corps creux de grimper sur ledit tunnel pour ressortir par l'orifice.

Le diamètre intérieur dudit tunnel est compris entre 1,3 et 2 fois supérieure à la largeur de l'insecte et la longueur dudit tunnel est comprise entre deux et sept fois supérieure, préférentiellement trois fois supérieure à la longueur de l'insecte. Cette longueur est comprise entre 1 cm à 4 cm et le diamètre intérieur étant compris entre 0,5 cm et 0,8 cm pour le ténébrion par exemple.

Avantageusement, les dimensions à savoir le diamètre intérieur et la longueur du tunnel peuvent être agrandies ou rétrécies en relation avec les dimensions de l'insecte à capturer, ainsi que la géométrie du tunnel qui peut être cylindrique, tronconique ou en forme d'entonnoir. De cette manière, on garde le corps creux mais on retire uniquement les éléments de tunnels pour les remplacer avec ceux qui s'adaptent aux dimensions du nouvel insecte cible. Le diamètre de la partie supérieure de l'élément de tunnel est plus grand par rapport à celui de la partie inférieure de manière à faciliter son implantation dans les trous d'implantation et à éviter au maximum la sortie d'un insecte capturé.

Selon un mode de réalisation de l'invention, les éléments de tunnels peuvent être regroupés de manière à constituer une unité fonctionnelle.

Avantageusement, dès lors que l'insecte est dans le tunnel, il est contraint de progresser de manière unidirectionnelle vers l'extrémité à l'intérieur et une fois tombé au fond du corps creux, l'insecte n'a aucune possibilité de ressortir du piège.

Les dimensions de l'entrée et du corps du tunnel doivent tenir compte du principe de thigmotactisme spécifique à chaque espèce d'insecte à capturer. En effet, un tunnel trop étroit est perçu par l'insecte comme un refuge ce qui l'inciterait à s'y nicher. Au contraire, un tunnel ayant des dimensions trop importantes offre à l'insecte la possibilité de faire demi-tour en pivotant sur lui-même dans le tunnel, ce qui est à éviter. Par exemple, chez les ténébrions, la demanderesse a observé que le diamètre d'un orifice proche de la taille de cet insecte a un effet significativement dissuasif vis-à-vis de son comportement à progresser dans le tunnel.

Grâce au principe de thigmotactisme des insectes, il a été observé lors du déplacement des ténébrions appartenant à la famille des Tenebrionidae, leur propension naturelle à suivre un pli saillant ménagé à la surface du corps creux. Cette propension a également observé chez d'autres insectes rampants cibles de la famille des Blattellidae (ex : blattes et cafards), des Cimicoidae (ex : les punaises de lit), des Armadillidiidae (ex : les cloportes), des Curculionidae (ex : les charançons), des Bostrichidae (ex : les capucins), des Lespimatidae (ex : les poissons d'argent) ainsi que chez certaines araignées et des insectes volants tels que les mouches, les mites, les guêpes et les frelons. L'existence du pli saillant augmente la probabilité de capture. Le piège conforme à l'invention est apte à capturer les arthropodes cités ci-dessus.

Selon un mode de réalisation de l'invention, un pli saillant est ménagé au niveau de la bordure périphérique supérieure de l'élément de tunnel de manière à orienter efficacement le sens de déplacement de l'insecte à se diriger vers l'orifice.

Avantageusement, ce principe a été mis à profit en ce sens qu'un orifice est ménagé à proximité d'au moins l'une des extrémités du pli saillant. De la sorte, l'on incite l'insecte à longer la partie inférieure du pli saillant, de sorte que lorsqu'il finit de parcourir la partie inférieure du pli saillant, il arrive à l'une des extrémités de celui-ci, précisément au niveau de la partie supérieure de l'élément de tunnel puis au bord de l'orifice. Le pli saillant peut se prolonger jusqu'à l'intérieur du tunnel.

Selon un mode de réalisation, le pli saillant a une hauteur d'au moins 0,5 fois la hauteur et 2 fois la longueur de l'insecte car un insecte debout sur ses deux pattes arrières ne pourraient le franchir, soit une hauteur comprise entre 0,1 cm et 1 cm dans le cas du ténébrion.

Conformément à l'invention, les extrémités des tunnels à l'intérieur du corps creux ne se touchent pas entre elles.

Conformément à l'invention, les orifices se prolongeant en tunnels sont arrangées de sorte que leurs extrémités situées à l'intérieur du corps creux ne se font pas face l'une par rapport à l'autre pour éviter qu'un insecte tombé depuis un tunnel situé au dessus atterrisse au niveau de l'extrémité intérieure d'un tunnel situé plus bas. Avantageusement, il reste suffisamment de volume à l'intérieur du corps creux pour permettre de stocker les insectes rampants emprisonnés. En effet, même si les trous d'implantation destinés à recevoir les éléments de tunnels sont placés de manière symétrique les uns en face des autres, les tunnels sont orientés concentriquement vers le centre du corps creux évitant ainsi que les extrémités intérieures des tunnels diamétralement opposées ne soient en face.

Conformément à l'invention, la somme de la surface totale de tous les trous d'implantations directement pratiqués sur le corps creux représente entre 15% et 80% de la superficie totale du corps creux. En effet, lorsque la surface totale des trous d'implantation est trop importante, la structure du corps creux peut être fragilisée. La section dudit trou d'implantation peut être circulaire, polygonale ou ovale alors que le tunnel correspondant a une section de géométrie différente. Ainsi, le nombre total d'orifices que peut comporter le corps creux dépend de la forme, du volume et de la superficie totale dudit corps creux. De manière avantageuse, il peut être privilégié d'avoir un maximum d'orifices sur la surface extérieure du corps creux de manière à offrir aux insectes plus de possibilités de passage pour une probabilité de capture élevée.

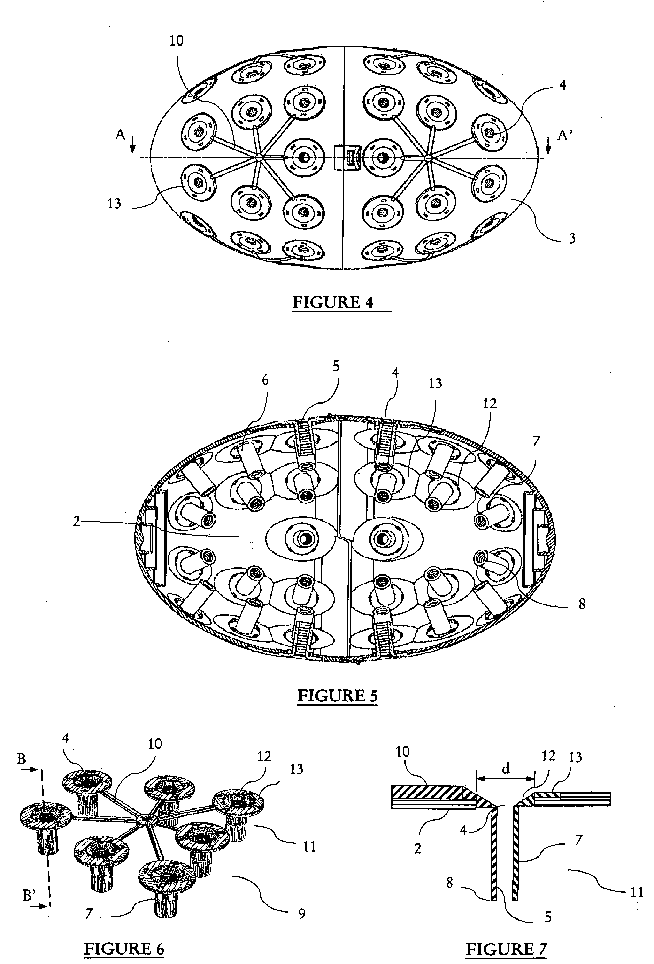

En conditions d'utilisation conformément à l'invention, lorsque le piège tel que représenté à la figure 5 est disposé horizontalement à même le sol, certains tunnels situés en dessous d'un plan horizontal passant par l'axe central du corps creux font un angle « α » appelé « angle critique de progression » compris entre 0° et 70° par rapport audit plan horizontal passant par ledit axe central. Dans ces conditions, on permet à l'insecte en provenance du sol de progresser dans le tunnel et d'être emprisonné. Lorsque l'angle α est supérieur à 70° mais inférieur à 90°, la demanderesse a observé qu'une proportion plus faible d'insectes parvient toujours à progresser dans le tunnel et est emprisonnée.

Conformément à l'invention, l'orifice du tunnel est de géométrie et de dimension variables. En effet, l'orifice peut avoir une section de forme circulaire, ovale, polygonale ou triangulaire. On privilégie un orifice circulaire pour les insectes dont la morphologie générale peut être assimilée à une forme tubulaire et un orifice ovale pour les insectes de morphologie plate.

Dans une variante de réalisation, un orifice ayant des angles bien marqués peut être adopté de manière à favoriser le comportement thigmotactique des insectes ; dans un tel cas, la section de l'orifice peut être rectangulaire ou triangulaire.

Conformément à l'invention, le corps creux peut avoir une forme sphérique, ovoïdale, cylindrique, conique ou parallélépipédique dont les dimensions doivent tenir compte du nombre total des trous d'implantation des éléments de tunnels, de la longueur des tunnels pour que leurs extrémités ne se touchent pas entre elles ainsi que du volume intérieur disponible dans le corps creux pour stocker les insectes capturés avant la vidange.

Avantageusement, le piège conforme à l'invention est vidé par l'utilisateur en séparant les deux éléments formant le corps creux pour des réutilisations ultérieures successives.

Ledit corps creux peut être fabriqué à partir de matériaux biodégradables ou non et non consommables par les insectes. Lesdits matériaux sont choisis parmi les polymères plastiques d'origine fossile ou biosourcés, les polymères d'origine végétale, le bois et ses dérivés. Les matériaux polymères sont mis en forme par les techniques de plasturgie bien connues de l'homme du métier. D'autres matériaux tels que le métal peuvent également servir à fabriquer le corps creux ainsi que les éléments de tunnels.

Avantageusement, le corps creux ainsi que les éléments de tunnels peuvent être fabriqués à partir de polymères chargés en compositions actives, par exemple attractives, de manière à augmenter l'attractivité du piège vis-à-vis des insectes à capturer. Les procédés d'obtention de tels polymères chargés en compositions actives sont divulgués par les brevets FR2901172 et FR2956345. De la sorte, les éléments de tunnels qui sont amovibles deviennent des consommables pouvant être chargés en substances actives notamment en attractif.

Lorsque le corps creux est cylindrique, parallélépipédique, l'un des éléments peut être de type bouchon à retirer permettant de vider le piège, ledit bouchon s'emboite avec le reste du corps creux. Dans d'autres cas, l'un des éléments peut être l'une des faces du corps creux parallélépipédique, ou pyramidale qui s'emboite avec le reste du piège.

Conformément à un mode de réalisation de l'invention, la surface extérieure du corps creux peut présenter des aspérités ou des stries ou encore un grain de surface de manière à permettre aux insectes rampants d'escalader facilement la surface pour atteindre les orifices.

En conditions d'utilisation, le piège conforme à l'invention peut être disposé en toute position sans impacter ni son fonctionnement ni son efficacité. Dans le cas d'un corps creux cylindrique, sphérique ou ovoïdal, le piège peut rouler sur lui-même à l'endroit où il est placé sans que les insectes emprisonnés aient la possibilité de ressortir.

Dans un mode de réalisation de l'invention, un attractif pour insectes rampants peut être placé à l'intérieur du corps creux. Un tel attractif peut être sous forme solide ou liquide. Ledit attractif est choisi parmi des substances alimentaires, des molécules sémiochimiques, des matériaux et substances d'origine organique et/ou minérale, des huiles essentielles, ou des excréments d'animaux. Dans certains cas, un attractif liquide peut être incorporé dans un support absorbant. Ledit support absorbant est choisi parmi les polymères plastiques d'origine fossile ou biosourcés, les polymères d'origine végétale, le bois et ses dérivés. Les enseignements sur le mode d'incorporation d'une composition liquide dans un support sont divulgués par les documents FR2901172, FR2956345, FR2959100 et FR2992325 déposés au nom de la demanderesse.

Dans une variante de réalisation de l'invention, un insecticide pour insectes rampants peut être placé à l'intérieur du corps creux. Un tel insecticide peut être sous forme solide ou liquide. Un insecticide liquide peut être incorporé dans un support absorbant de même nature que pour l'attractif. Lorsque l'insecticide est solide, il est solubilisé dans un solvant compatible avant d'être incorporé dans ledit support absorbant.

Dans un autre mode de réalisation de l'invention, un insecticide est associé simultanément avec un attractif à l'intérieur du corps creux pour un effet attracticide vis-à-vis de l'insecte rampant cible.

Un second objet de la présente invention est de fournir un procédé permettant de capturer plusieurs types d'insectes particulièrement les insectes rampants tels que les ténébrions dans les bâtiments d'élevage avicole en utilisant le piège ayant les caractéristiques décrites ci-dessus caractérisé en ce qu'en conditions d'utilisation, l'on dispose ledit piège en toute position sur une partie de la surface de l'endroit susceptible d'être infestée sans que lesdits insectes capturés puissent s'en échapper et en ce que l'on retire les éléments de tunnels pour leur remplacement avec d'autres éléments de tunnels adaptés aux dimensions du nouvel insecte cible.

Selon un mode de mise en oeuvre, en conditions d'utilisation, l'on dispose le piège en position horizontale de manière à ce qu'il puisse rouler sur lui-même pour aller d'un emplacement à un autre sur une partie de ladite surface.

En effet, lorsque l'on dispose par exemple un piège de forme ovoïdale, ronde ou cylindrique à même le sol dans un bâtiment d'élevage, les volailles sont susceptibles soit de marcher dessus soit de lui donner des coups provoquant un déplacement incontrôlé de celui-ci d'un endroit à un autre du sol, permettant une capture sur l'intégralité du bâtiment et donc sur les patchs d'infestation.

Les différentes caractéristiques du piège à insectes rampants objet de la présente invention sont détaillées dans les formes de réalisations particulières présentées ci-après :
**Figure 1** **:** vue en perspective d'un prototype de piège à insectes de forme ovoïdale.
**Figure 2** **:** coupe longitudinale suivant le plan AA' du piège représenté à la figure 1
**Figure 3a** : vue en perspective d'un tunnel cylindrique
**Figure 3b** : vue en perspective d'un tunnel de section carré en forme d'entonnoir
**Figure 4** **:** vue de face d'un piège de forme ovoïdale comportant des unités fonctionnelles
**Figure 5** **:** coupe longitudinale suivant le plan horizontal AA' du piège représenté à la figure 4.
**Figure 6** **:** vue en perspective d'une unité fonctionnelle du piège représentée à la figure 4.
**Figure 7** **:** coupe transversale suivant le plan vertical BB' d'un élément de tunnel.

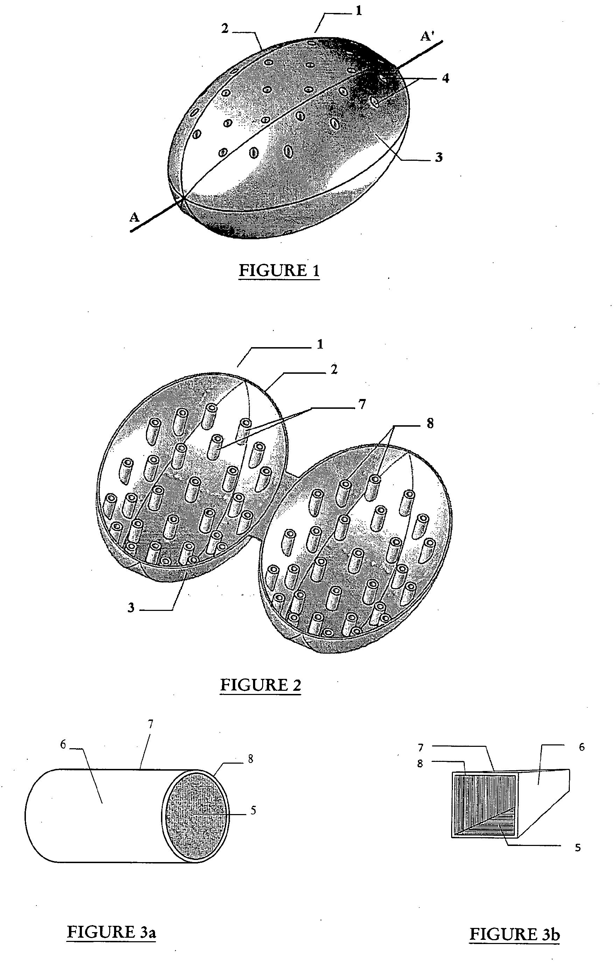

La figure 1 montre un piège à insectes rampants (1) ayant un corps creux (2) de forme ovoïdale. La surface extérieure (3) du corps creux (2) est perforée de plusieurs orifices (4) circulaires. Le diamètre intérieur de l'orifice (4) est adapté pour permettre de piéger des insectes tels que les ténébrions. L'orifice (4) se prolonge en tunnel dirigé vers le centre du corps creux (2), la paroi intérieure (5) du tunnel est rugueuse contrairement à la paroi extérieure (6) qui est lisse pour empêcher l'insecte emprisonné de ressortir par l'orifice (4) en escaladant le tunnel.

La figure 2 montre une coupe longitudinale d'un piège à insectes rampants (1) de forme ovoïdale suivant le grand axe AA'. La surface (3) du piège à insectes rampants (1) est perforée de plusieurs orifices circulaires (4) se prolongeant en tunnel (7) orienté vers l'intérieur du corps creux (2). Les extrémités (8) des tunnels (7) à l'intérieur du corps creux (2) ne se touchent pas entre elles.

La figure 3a montre un tunnel (7) dont l'extrémité intérieure (8) est circulaire. La paroi externe (6) est lisse pour empêcher les insectes rampants emprisonnés à l'intérieur du corps creux (2) d'escalader le tunnel (7) et une paroi intérieure (5) rugueuse pour permettre aux insectes rampants de progresser dans le tunnel (7).

La figure 3b montre un tunnel (7) en forme d'entonnoir dont l'extrémité (8) est rectangulaire. La paroi intérieure (5) est rugueuse contrairement à la paroi externe (6) qui est lisse.

La figure 4 montre un prototype représentant une vue de face d'un piège (1) de forme ovoïdale comportant des unités fonctionnelles (9). Chaque unité fonctionnelle (9) comprend sept éléments de tunnels (7), implantés à la surface (3) au niveau des trous d'implantation par l'intermédiaire de sa partie supérieure (13) et maintenus joints en leur centre par des plis saillants (10) débouchant au niveau des orifices (4).

La figure 5 montre les dispositions des tunnels (7) à l'intérieur du corps creux (2) disposé en position horizontale selon le plan AA' représenté à la figure 4. Même si les orifices (4) des tunnels (7) sont disposés de manière symétrique les uns en face des autres, les tunnels (7) sont orientés vers le centre du corps creux (2) évitant ainsi que les extrémités (8) des tunnels (7) diamétralement opposées ne soient èn face. La partie supérieure (13) de l'élément de tunnels (11) est imbriquée dans le trou d'implantation par l'intermédiaire de la portion inclinée (12) et la partie inférieure de l'élément de tunnel est constitué de tunnel (7) cylindrique dont la paroi intérieure (5) est rugueuse et la paroi extérieure (6) est lisse. La portion inclinée (12) fait partie intégrante de la structure de la partie supérieure (13) laquelle a pour fonction d'assurer l'implantation de l'élément de tunnel (11) dans le trou d'implantation.

La figure 6 montre une unité fonctionnelle (9) comprenant sept éléments de tunnels (11). Chaque élément de tunnel (11) comporte une partie supérieure (13) dont la portion (12) est légèrement inclinée vers centre de l'orifice (4) et une partie inférieure correspondant au tunnel (7) relié individuellement par des plis saillants (10), lesquels convergent vers le centre de l'unité (9) ; l'une des extrémités de chacun des plis saillants (10) est directement liée à un élément de tunnel (7) au niveau de sa partie supérieure (13).

La figure 7 montre un élément de tunnel (11) comportant des tunnels (7) cylindriques en coupe suivant le plan BB' représenté à la figure 6 sensiblement en forme de T dont la partie supérieure (13) et en son milieu la portion inclinée (12) ; les bordures inférieures de la portion inclinée (12) délimitent la circonférence de l'orifice (4). La distance « d » représente le diamètre du trou d'implantation (non représenté) directement pratiqué à la surface au corps creux (2) pour recevoir la partie supérieure (13) de l'élément du tunnel (11). Après avoir suivi le pli saillant (10), les insectes pénètrent dans l'orifice (4) du tunnel (7) cylindrique via la portion inclinée (12) de la partie supérieure (13) de l'élément de tunnel (11) et tombent dans le piège après avoir franchi l'extrémité (8).

L'invention est illustrée par les exemples ci-dessous. Bien entendu, la portée de l'objet revendiqué n'est nullement limitée ni au type d'insecte choisi ni au mode de réalisation exemplifié.

### Exemple 1 :

La demanderesse a constaté que certains bâtiments d'élevage de poulets sont envahis par des ténébrions de poulaillers, *Alphitobius diaperinus,* qui se concentrent autour des abreuvoirs et les mangeoires et s'abritent dans la litière. Les populations de ténébrions peuvent ainsi y atteindre plusieurs centaines de milliers d'individus (Axtell & Arends 1990 ; Dunford & Kaufman 2012). De plus la durée de vie des ténébrions est suffisamment longue ce qui leur permet d'envahir plusieurs élevages de poulets successifs. Un *A. diaperinus* adulte mesure en moyenne 0,5 cm de longueur pour environ 0,4 cm de tour de taille, précisément de largeur et 0,5 cm de hauteur.

A titre de comparaison, des pièges commercialisés sous la marque PALMatrap® sont testés au même moment et dans les mêmes conditions que les pièges conformes à l'invention. Le piège PALMatrap® comprend un corps creux strié de forme pyramidale, de base circulaire de 34 cm de diamètre pour 22 cm de hauteur. Un récipient cylindrique de 23 cm de diamètre sur 10 cm de hauteur est placé à l'intérieur du corps creux pour recueillir les insectes capturés. La partie supérieure du corps creux pyramidal présente une ouverture circulaire de 8,5 cm de diamètre pour permettre aux ténébrions d'accéder au piège. En conditions d'utilisation, le piège PALMatrap® est semi-enterré et doit être disposé en position verticale.

Le piège conforme à l'invention comprend un corps creux ovoïdal en plastique de 11 cm de petit axe pour 20 cm de grand axe, perforé de 56 orifices circulaires répartis sur sa surface extérieure (figure 1). Ledit corps creux est formé par deux demi-ovoïdes s'emboitant l'un à l'autre. Chaque orifice est prolongé par un tunnel de 3 cm de longueur pour 0,7 cm de diamètre intérieur. La paroi intérieure du tunnel est rugueuse alors que la paroi extérieure est lisse. La surface du corps creux a été poncée pour créer des aspérités afin de faciliter le déplacement des ténébrions. 50 g de fiente de poules sont utilisées comme attractif et sont introduites dans le corps creux. Les expériences ont été menées pendant 15 jours. Neuf pièges répondant aux caractéristiques ci-dessus sont disposés à même le sol et sont placés selon la distribution des emplacements suivants :
- 3 pièges autour des abreuvoirs,
- 3 pièges autour des mangeoires,
- 3 pièges dans la litière.

A la fin des expériences, on vide le corps creux en séparant les deux éléments puis on compte le nombre total de ténébrions capturés. Les résultats obtenus sont récapitulés dans le tableau 1 ci-dessous :

**Tableau 1 : Nombre moyen de ténébrions capturés par piège**

| Piège | Attractif | Nb orifices | Nb réplicas | Nb ténébrions capturés | Emplacement |
|---|---|---|---|---|---|
| PALMatrap® | Non | 1 | 3 | 170 | Abreuvoir |
| Ovoïdal | Non | 56 | 3 | 202 | |
| Ovoïdal | Oui | 56 | 11 | 717 | |
| PALMatrap® | Oui | 1 | 3 | 509 | Mangeoire |
| Ovoïdal | Oui | 56 | 8 | 703 | |
| PALMatrap® | Non | 1 | 3 | 218 | Litière |
| Ovoïdal | Non | 56 | 5 | 1253 | |

On constate que le nombre moyen de ténébrions capturés par le piège ovoïdal conforme à l'invention est supérieur à celui du piège PALMatrap® quelque soit l'emplacement choisi, en présence ou pas d'attractif.

Les ténébrions pénètrent indifféremment dans les orifices prolongés en tunnels. Il est observé qu'aucun ténébrion ne s'est réfugié dans le tunnel au cours de sa progression vers l'extrémité à l'intérieur du corps creux. De même, aucun ténébrion n'a réussi à faire demi-tour en pivotant sur lui-même une fois qu'il se trouve dans le tunnel. Il est noté qu'en moyenne, 20% à 40% des ténébrions capturés sont entrés par les orifices des tunnels situés en dessous d'un plan horizontal passant par l'axe central du corps creux faisant un angle α compris entre 0° et 70° par rapport audit plan horizontal passant par ledit axe central. Il est constaté qu'en moyenne, 3% à 5% des ténébrions capturés sont entrés par les orifices des tunnels pour lesquels l'angle α > 70°.

### Evaluation de la propension des ténébrions à longer la partie inférieure d'un pli saillant

Pour observer en laboratoire la modification du comportement des ténébrions, deux protocoles ont permis d'évaluer leur propension à enjamber des obstacles ou plutôt à les suivre afin de mettre en évidence le thigmotactisme de leur comportement.

Pour ce faire, dans un premier protocole, on mesure la distance moyenne sur laquelle un ténébrion va longer un obstacle rencontré sur son parcours, plutôt que de le franchir. Trois hauteurs d'obstacle différentes (0 cm ; 0,1 cm et 0,5 cm) ont été testées pour un total de 10 répliquas par hauteur démontrant que dès qu'un obstacle même de quelques millimètres est placé sur leur chemin, les ténébrions ont tendance à le suivre sur une longueur en lien avec la hauteur de l'obstacle, et ce, dès une hauteur de 0,1 cm (test Mann-Whitney, W=7,5, p<0,01 ; Graphe 1). A une hauteur de 0,5 cm, soit une fois la hauteur du ténébrion, tous les ténébrions longent la partie inférieure de l'obstacle sans le franchir sur au moins une distance de 10 cm. Les étoiles dénotent d'une différence significative selon un test de Mann-Whitney par rapport à une hauteur de 0 cm à p < 0,01 (**) et p < 0,001 (***).

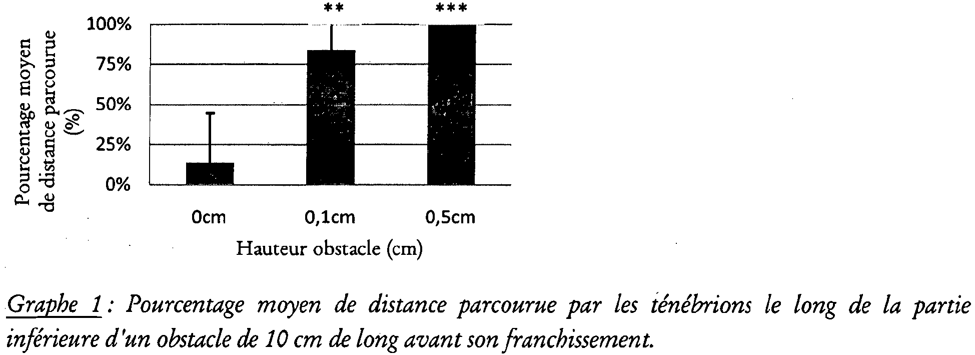

Dans le second protocole, on dispose d'un groupe de 10 ténébrions dans un petit enclos (3,5 cm x 3,5 cm) délimité par un obstacle dont la hauteur varie selon les tests (0 cm ; 0,5 cm ; 1 cm et 2 cm). Les résultats (Graphe 2) montrent que plus la hauteur de l'obstacle est élevée plus les ténébrions mettent du temps à le franchir. Ils franchissent de manière statistiquement similaire un obstacle d'une hauteur de 0 cm à 0,5 cm (test de Student p > 0,05), mais mettent significativement plus de temps pour franchir un obstacle d'une hauteur de 1 cm (4,2 fois plus de temps : test de Student t=9,385, p<0,001) ou 2 cm (7,3 fois plus de temps : test de Mann-Whitney, W=0, p<0,001).

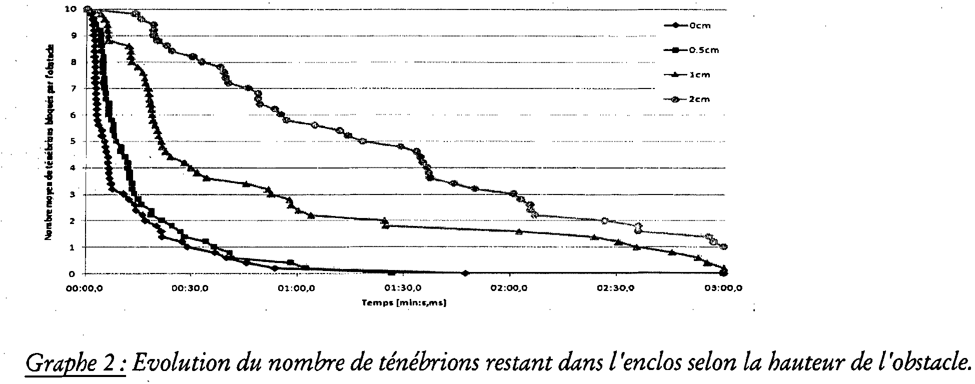

### Exemple 2 : Piège à mouches

Dans des conditions de laboratoire, le corps creux du piège décrit à l'exemple 1 a été substitué par un piège tel que représenté à la figure 4, les deux pièges ont la même forme mais on utilise uniquement un seul élément du corps creux pour capturer des mouches domestiques *(Musca domestica).* La mouche domestique adulte a une longueur moyenne d'environ 1 cm pour une largeur d'environ 0,5 cm au niveau de son abdomen et une envergure d'environ 1,5 cm entre les deux extrémités des ailes sur le plan transversal. Ainsi, pour la mouche, la largeur au sens de l'invention est son envergure. A l'intérieure d'une pièce (2,5 cm x 2 m x 2,6 m de hauteur) à température contrôlée (22°C± 1°C) placée en légère pressurisation afin d'éviter une pollution de l'air, sont placés les pièges à tester simultanément espacés d'au moins 1 m. Cinq répliquas ont été réalisés en interchangeant les pièges afin de vérifier que leur position dans la pièce n'influence pas la capture. Durant différentes sessions, six pièges dont les caractéristiques sont résumées dans le tableau ci-dessous ont été testés :

**Tableau 2: efficacité de capture des mouches en fonction des dimensions et de la géométrie des tunnels**

| N° piège | Nombre orifices | Longueur du tunnel (cm) | Diamètre intérieur du tunnel (cm) | Géométrie du tunnel | Efficacité de capture (%) |
|---|---|---|---|---|---|
| 1 | 28 | 3 | 0,8 | cylindrique | 0 |
| 2 | 28 | 2 | 1,9 | cylindrique | + + + |
| 3 | 28 | 5 | 2 à 1 | entonnoir | + + + + |
| 4 | 28 | 1,3 | 0,8 | cylindrique | 0 |
| 5 | 20 | 2,5 | 2,1 | cylindrique | + + |
| 6 | 12 | 2,5 | 2,1 | cylindrique | + |

D'une manière générale, on observe que plus le nombre d'orifices est important, plus le taux de capture est élevé (pièges 5 et 6). Toutefois, les paramètres liés aux dimensions (longueur et diamètre intérieur) ainsi qu'à la forme (cylindrique ou tronconique) des tunnels sont aussi décisifs car elles conditionnent la propension des mouches à fréquenter un piège plutôt qu'un autre.

Il est également à noter qu'une fois capturées, 64,2% ± 19,4% des mouches y restent captives et n'arrivent pas à retrouver la sortie particulièrement lorsque la longueur du tunnel est au moins 2 fois supérieure à sa longueur. La forme tronconique est la forme permettant le moins de sortie de mouches capturées.

## Revendications

1. Piège (1) à insectes comprenant un corps creux (2) formé par deux éléments s'emboitant l'un à l'autre, la surface (3) extérieure dudit corps creux (2) est perforée de plusieurs orifices (4) permettant à l'insecte à capturer de pénétrer à l'intérieur du piège, chaque orifice (4) se prolongeant en tunnel (7) orienté vers l'intérieur du corps creux (2), ***caractérisé en ce que*** des éléments de tunnels (11) amovibles sont implantés à la surface (3) dudit corps creux (2) par l'intermédiaire de sa partie supérieure (13) laquelle s'imbrique dans le trou d'implantation directement pratiqué sur le corps creux (2), ledit élément de tunnel (11) comporte une partie inférieure correspondant au tunnel (7) dont le diamètre intérieur et la longueur sont adaptables aux dimensions de l'insecte cible de sorte que ledit insecte s'y trouvant est contraint de progresser de manière unidirectionnelle vers l'intérieur du corps creux (2) mais ne l'autorisent pas à faire demi-tour en pivotant sur lui-même sur tout ou au moins une partie de la longueur dudit tunnel (7), et ***en ce que*** la paroi intérieure (5) dudit tunnel (7) étant rugueuse pour permettre à l'insecte d'y progresser tandis que la paroi extérieure (6) est lisse pour empêcher les insectes capturés dans le corps creux (2) de grimper sur ledit tunnel (7) pour ressortir par l'orifice (4).

2. Piège selon la revendication 1, ***caractérisé en ce que*** les dimensions des tunnels (7) à savoir le diamètre intérieur et la longueur du tunnel (7) étant susceptibles d'être agrandies ou rétrécies en relation avec les dimensions dudit insecte cible.

3. Piège selon la revendication 2, ***caractérisé en ce que*** le diamètre intérieur dudit tunnel (7) est compris entre 1,3 et 2 fois supérieure à la largeur dudit insecte cible à savoir l'axe le plus long dans le plan frontal dudit insecte et la longueur dudit tunnel (7) est comprise entre deux et sept fois supérieure à la longueur dudit insecte cible à savoir l'axe le plus long dans le plan sagittal dudit insecte.

4. Piège selon la revendication 2, ***caractérisé en ce que*** la longueur du tunnel (7) est comprise entre 1 cm à 4 cm et le diamètre intérieur compris entre 0,5 cm et 0,8 cm pour le ténébrion.

5. Piège selon l'une des revendications 1 à 4, ***caractérisé en ce que*** les éléments de tunnels (11) sont placés de manière symétrique les uns en face des autres, les tunnels (7) étant orientés concentriquement vers le centre du corps creux (2) évitant ainsi que les extrémités (8) intérieures des tunnels (7) diamétralement opposées ne soient en face.

6. Piège selon la revendication 5, ***caractérisé en ce que*** les éléments de tunnels (11) sont regroupés de manière à constituer une unité fonctionnelle (9).

7. Piège selon l'une des revendications 1 à 6, ***caractérisé en ce qu***'un pli saillant (10) est ménagé au niveau de la partie supérieure (13) de l'élément de tunnel (11) de manière à orienter efficacement le sens de déplacement de l'insecte à se diriger vers l'orifice (4).

8. Piège selon la revendication 7, ***caractérisé en ce que*** la hauteur du pli saillant (10) est comprise entre 0,5 cm et 1 cm pour le ténébrion.

9. Piège selon l'une des revendications 7 et 8, ***caractérisé en ce que*** le pli saillant (10) se prolonge jusqu'à l'intérieur du tunnel (7).

10. Piège selon l'une des revendications 1 à 9, ***caractérisé en ce qu***'en conditions d'utilisation, lorsque ledit piège est disposé à même le sol, les tunnels (7) situés en dessous d'un plan horizontal passant par l'axe central du corps creux (2) font un angle « α » compris entre 0° et 70° par rapport audit plan horizontal de manière à permettre la progression des insectes dans lesdits tunnels (7).

11. Piège selon l'une des revendications 1 à 10, ***caractérisé en ce que*** la somme de la surface totale de tous les trous d'implantations directement pratiqués sur le corps creux (2) représente entre 15% et 80% de la superficie totale du corps creux (2).

12. Piège selon l'une des revendications 1 à 11, ***caractérisé en ce que*** la surface extérieure (3) du corps creux (2) présente des aspérités ou des stries ou encore un grain de surface.

13. Piège selon l'une des revendications 1 à 12, ***caractérisé en ce que*** ledit corps creux (2) ainsi que les éléments de tunnels (11) sont fabriqués à partir de matériaux biodégradables ou non choisis parmi les polymères plastiques d'origine fossile ou biosourcés, les polymères d'origine végétale ou le bois et ses dérivés.

14. Piège selon l'une des revendications 1 à 12, ***caractérisé en ce que*** ledit corps creux (2) ainsi que les éléments de tunnels (11) sont fabriqués à partir d'un métal.

15. Piège selon l'une des revendications 5, 6, 7 et 13, ***caractérisé en ce que*** l'élément de tunnels (11) est chargé en substances actives notamment en attractif.

16. Piège selon l'une des revendications 10 à 14, ***caractérisé en ce que*** ledit corps creux (2) a une forme choisie parmi une forme sphérique, ovoïdale, cylindrique, pyramidale, conique ou parallélépipédique.

17. Procédé pour capturer plusieurs types d'insectes, particulièrement les insectes rampants tels que les ténébrions dans les bâtiments d'élevage avicole en utilisant le piège selon l'une des revendications 1 à 16, ***caractérisé en ce qu***'en conditions d'utilisation, l'on dispose ledit piège (1) en toute position sur une partie de la surface de l'endroit susceptible d'être infestée sans que lesdits insectes capturés puissent s'en échapper et ***en ce que*** l'on retire les éléments de tunnels (11) pour leur remplacement avec d'autres éléments de tunnels (11) adaptés aux dimensions du nouvel insecte cible.

18. Procédé selon la revendication 17, ***caractérisé en ce que*** l'on dispose le piège (1) en position horizontale de manière à ce qu'il puisse rouler sur lui-même pour aller d'un emplacement à un autre sur une partie de ladite surface.

## Patentansprüche

1. Insektenfalle (1), die einen Hohlkörper (2) umfasst, der durch zwei Elemente gebildet wird, die ineinander einrasten, wobei die Außenoberfläche (3) des Hohlkörpers (2) durch mehrere Öffnungen (4) durchbohrtist, die es erlauben, das Insekt beim Eindringen in das Innere der Falleeinzufangen, wobei sich jede Öffnung (4) als Tunnel (7) in Richtung des Inneren des Hohlkörpers (2) verlängert, **dadurch gekennzeichnet, dass** die abnehmbaren Tunnelelemente (11) an der Oberfläche (3) des Hohlkörpers (2) mithilfe seines oberen Abschnittes (13) eingesetzt werden, das mit dem Einsetzlochineinandergreift, das direkt auf dem Hohlkörper (2) hergestelltist, wobei das Tunnelelement (11) einendem Tunnel (7) entsprechenden unteren Abschnitt umfasst, dessen Innendurchmesser und Länge an die Dimensionen des Zielinsekts derartanpassbar sind, dass das Insekt, wenn es sich dort befindet, gezwungen ist, sich in unidirektionaler Richtung in das Innere des Hohlkörpers (2) fortzubewegen, aberes ihm nicht gestattet ist, durch Drehen um sich selbst auf der gesamten oder mindestens auf einem Abschnittder Länge des Tunnels (7) kehrtzumachen, und **dadurch gekennzeichnet, dass** die Innenwand (5) des Tunnels (7) rau ist, um dem Insekt zu ermöglichen, sich darauf fortzubewegen, wohingegen die Außenwand (6) glatt ist, um zu verhindern, dass die im Hohlkörper (2) eingefangenen Insekten in den Tunnel (7) klettern, um durch die Öffnung (4) herauszugelangen.

2. Falle nach Anspruch 1, **dadurch gekennzeichnet, dass** die Dimensionen des Tunnels (7), und zwar der Innendurchmesser und die Länge des Tunnels (7) im Verhältnis zu den Dimensionen des Zielinsektserweitert oder verengt werden können.

3. Falle nach Anspruch 2, **dadurch gekennzeichnet, dass** der Innendurchmesser des Tunnels (7) zwischen 1,3 und 2 Mal größer istals die Größe des Zielinsekts, und zwar die längste Achse in der Frontalebene des Insekts, und dass die Länge des Tunnels (7) zwischen zwei und sieben Mal größer ist als die Länge des Zielinsekts, und zwar die längste Achse in der Sagittalebene des Insekts.

4. Falle nach Anspruch 2, **dadurch gekennzeichnet, dass** die Länge des Tunnels (7) zwischen 1 cm und 4 cm liegt und der Innendurchmesser zwischen 0,5 cm und 0,8 cm für den Käfer liegt.

5. Falle nach einem der Ansprüche 1 bis 4, **dadurch gekennzeichnet, dass** die Tunnelelemente (11) in symmetrischer Weise einander gegenüber platziert werden, wobei die Tunnel (7) konzentrisch zum Zentrum des Hohlkörpers (2) hin gerichtet sind und so verhindern, dass die inneren Enden (8) der diametral entgegengesetzten Tunnel (7) sich nicht gegenüberliegen.

6. Falle nach Anspruch 5, **dadurch gekennzeichnet, dass** die Tunnelelemente (11) derart zusammengestelltsind, dass sie eine funktionale Einheit (9) bilden.

7. Falle nach einem der Ansprüche 1 bis 6, **dadurch gekennzeichnet, dass** eine vorstehende Kante (10) hinsichtlich des oberen Abschnittes (13) des Tunnelelements (11) ausgebildetist, um die Bewegungsrichtung des Insekts erfolgreich dahin auszurichten, sich in Richtung der Öffnung (4) zu wenden.

8. Falle nach Anspruch 7, **dadurch gekennzeichnet, dass** die Höhe der vorstehenden Kante (10) zwischen 0,5 cm und 1 cm für den Käfer liegt.

9. Falle nach einem der Ansprüche 7 und 8, **dadurch gekennzeichnet, dass** die vorstehende Kante (10) sich bis in das Innere des Tunnels (7) verlängert.

10. Falle nach einem der Ansprüche 1 bis 9, **dadurch gekennzeichnet, dass** unter Nutzungsbedingungen, wenn die Falle auf dem Boden aufgestellt ist, die Tunnel (7), die unterhalb einer horizontalen Ebene liegen, die entlang der Mittelachse des Hohlkörpers (2) verläuft, einen Winkel "α" zwischen 0° und 70° bezogen auf die horizontale Ebene derart bilden, um das Vordringen der Insekten in die Tunnel (7) zu erlauben.

11. Falle nach einem der Ansprüche 1 bis 10, **dadurch gekennzeichnet, dass** die Summe der Gesamtoberfläche aller Bohrlöcher, die direkt auf dem Hohlkörper (2) angebracht sind, zwischen 15% und 80% der Gesamtoberfläche des Hohlkörpers (2) ausmacht.

12. Falle nach einem der Ansprüche 1 bis 11, **dadurch gekennzeichnet, dass** die Außenoberfläche (3) des Hohlkörpers (2) Unebenheiten, Rillen oder auch Oberflächenkörnung aufweist.

13. Falle nach einem der Ansprüche 1 bis 12, **dadurch gekennzeichnet, dass** der Hohlkörper (2) sowie die Tunnelelemente (11) aus biologisch abbaubaren Materialien hergestellt werden oder nicht aus den plastischen Polymeren mit fossiler oder biobasierter Herkunft, den Polymeren mit pflanzlicher Herkunft oder Holz und seinen Derivaten ausgewählt werden.

14. Falle nach einem der Ansprüche 1 bis 12, **dadurch gekennzeichnet, dass** der Hohlkörper (2) sowie die Tunnelelemente (11) aus einem Metall hergestellt werden.

15. Falle nach einem der Ansprüche 5, 6, 7 und 13, **dadurch gekennzeichnet, dass** die Tunnelelemente (11) mit aktiven, insbesondere anlockenden Substanzen gefüllt sind.

16. Falle nach einem der Ansprüche 10 bis 14, **dadurch gekennzeichnet**, dassder Hohlkörper (2) eine Form aufweist, ausgewählt aus einer kugelförmigen, eiförmigen, zylindrischen, pyramidenförmigen, konischen oder quaderförmigen Form.

17. Verfahren zum Einfangen mehrerer Arten von Insekten, insbesondere krabbelnder Insekten wie die Käfer in den Ställen der Geflügelhaltung, unter Verwendung der Falle nach einem der Ansprüche 1 bis 16, **dadurch gekennzeichnet, dass** man unter den Nutzungsbedingungen die Falle (1) in jeder Position auf einem Abschnitt der Oberfläche an der Stelle aufstellt, die befallen zu sein scheint, ohne dass die eingefangenen Insekten daraus entkommen können, und **dadurch gekennzeichnet, dass** man die Tunnelelemente (11) zu deren Austausch gegen andere Tunnelelemente (11), die den Dimensionen des neuen Zielinsekts angepasst sind, entfernt.

18. Verfahren nach Anspruch 17, **dadurch gekennzeichnet, dass** man die Falle (1) in horizontaler Position derart aufstellt, dass sie von selbst rollen kann, um auf einem Abschnitt der Oberfläche von einem Ort zu einem anderen zu gelangen.

## Claims

1. Insect trap (1) comprising a hollow body (2) formed by two elements interlocking with each over, the outer surface (3) of said hollow body (2) is pierced with a plurality of openings (4) allowing the target insect to get into the trap, each opening (4) extending as a tunnel (7) oriented into the hollow body (2), ***characterized in that*** removable tunnel elements (11) are inserted onto the surface (3) of said hollow body (2) at their upper portion (13) which fits with the insert holes provided on the hollow body (2), said tunnel element (11) comprising a lower portion corresponding to the tunnel (7), the inner diameter and length thereof being adaptable to the dimensions of the target insect so as to force said insect inside the tunnel to move unidirectionnaly toward inside the hollow body (2) without allowing it to turn around by pivoting on itself, over an entire length or at least a portion of said tunnel (7), ***and in that*** the inner wall (5) of said tunnel (7) is rough to allow the insect to move on in the tunnel, whereas the outer wall (6) is smooth to prevent insects trapped inside the hollow body (2) to crawl up said tunnel (7) to get out by the opening (4).

2. Trap according to the claim 1, ***characterized in that*** the dimensions of the tunnels (7), namely the inner diameter and the length of the tunnel (7) are susceptible to be lengthened or shortened in relation with the dimensions of the insect to be captured.

3. Trap according to the claim 2, ***characterized in that*** the inner diameter of said tunnel (7) is between 1.3 and 2 times the width of the insect, namely the longest axis in the front plane of said insect, and the length of said tunnel (7) is between 2 and 7 times the length of the insect, namely the longest axis in die sagittal plane of the insect.

4. Trap according to the claim 2, ***characterized in that*** the length of the tunnel (7) is between 1 cm and 4 cm and the inner diameter is between 0.5 cm and 0.8 cm for the darkling beetle.

5. Trap according to any one of claims 1 to 4, ***characterized in that*** the tunnel elements (11) are provided symmetrically opposite each over, the tunnels (7) being oriented concentrically toward the center of the hollow body (2) avoiding the inner ends (8) of the tunnels (7) to face each over.

6. Trap according to the claim 5, ***characterized in that*** the tunnel elements (11) are grouped so as to form a functional unit (9).

7. Trap according to any one of claims 1 to 6, ***characterized in that*** a protruding fold (10) is provided at an upper portion (13) of the tunnel element (11) so as to orient efficiently the moving direction of die insect toward the opening (4).

8. Trap according to the claim 7, ***characterized in that*** the height of the protruding fold (10) is between 0.5 cm and 1 cm for the darkling beetle.

9. Trap according to any one of claims 7 and 8, ***characterized in that*** the protruding fold (10) extends up to inside the tunnel (7).

10. Trap according to any one of claims 1 to 9, ***characterized in that,*** when in use, when said trap is provided directly on the ground, the tunnels (7) positioned below a horizontal plane passing by the central axis of the hollow body (2) form an angle "α" comprised between 0° and 70° with respect to said horizontal plane to allow insect to progress into said tunnels (7).

11. Trap according to any one of claims 1 to 10, ***characterized in that*** a sum of the total surface of all insert holes provided on the hollow body (2) is between 15% and 80% of the total surface of die hollow body (2).

12. Trap according to any one of claims 1 to 11, ***characterized in that*** the outer surface (3) of the hollow body (2) comprises asperities, streaks, or surface grain.

13. Trap according to any one of claims 1 to 12, ***characterized in that*** said hollow body (2) and the tunnel element (11) are made of biodegradable materials or non-biodegradable materials from fossil-source or bio-based plastic polymers, polymers of plant origin, or wood and its derivatives.

14. Trap according to any one of claims 1 to 12, ***characterized in that*** the hollow body (2) and the tunnel element (11) are made of metal.

15. Trap according to any one of claims 5, 6, 7 and 13, ***characterized in that*** the tunnel element (11) is loaded with active substances, such as an attractant.

16. Trap according to any one of claims 10 to 14, ***characterized in that*** die said hollow body (2) has a shape selected among the following sphere, ovoid, cylinder, pyramid, cone or parallelepiped.

17. Method to capture a plurality of insect types, particularly crawling insects namely darkling beetles in poultry farm buildings using the trap of the any one of claims 1 to 16, ***characterized in that,*** when in use, the trap (1) is provided in any position on a portion of the area susceptible to infestation without allowing said trapped insects to escape therefrom, ***and in that,*** the tunnel elements (1) are removed for replacement by other tunnel elements (11) adapted to the dimensions of a new target insect.

18. Method according to the claim 17, ***characterized in that*** the trap (1) is provided in a horizontal position allowing the trap to roll on itself to go from one location to another on a portion of said area.
